# EUROPÄISCHE PATENTSCHRIFT

(11) **EP 3 541 319 B1**
(45) Veröffentlichungstag und Bekanntmachung des Hinweises auf die Patenterteilung: **06.04.2022**
(21) Anmeldenummer: 17811453.4
(22) Anmeldetag: 15.11.2017
(51) Int. Cl.: A61C 8/00

(54) **LABORANALOGSYSTEM**
LABORATORY ANALOG SYSTEM
SYSTÈME D'ANALOGUE DE LABORATOIRE

(30) Priorität: 18.11.2016 DE 102016122203
(43) Veröffentlichungstag der Anmeldung: 25.09.2019
(73) Patentinhaber: Gadau, Curd, 63856 Bessenbach (DE)
(72) Erfinder: Gadau, Curd, 63856 Bessenbach (DE)
(74) Vertreter: Meitinger, Thomas Heinz
(86) Internationale Anmeldenummer: PCT/EP2017/079278
(87) Internationale Veröffentlichungsnummer: WO 2018/091505

(56) Entgegenhaltungen:
- EP-A1- 1 946 720
- EP-A1- 2 130 513
- US-A- 5 782 918
- US-A1- 2003 162 148

## Beschreibung

Die vorliegende Erfindung betrifft ein Laboranalogsystem mit einer Hülse und einem Einsatzpfosten.

Ein Laboranalogsystem dient zur räumlichen Simulation einer Verbindung und Position eines Zahnimplantats in einem Gips- oder Kunststoffmodell. Dabei ist es wichtig, dass die räumlichen Gegebenheiten innerhalb eines abgeformten Gebisses möglichst genau wiedergegeben werden. Insbesondere sollte das Laboranalogsystem möglichst fest und ohne Spiel montiert werden, um eine spätere Rekonstruktion genau durchführen zu können.

Dokument EP 2 130 513 A1 offenbart ein System mit einer Abformkappe zur Übertragung der Position und Orientierung eines Implantats auf ein Abformmodell. Das System umfasst ferner ein Sekundärteil mit einer ringförmigen Auflagefläche zur Anordnung innerhalb der Abformkappe.

Es ist die Aufgabe der vorliegenden Erfindung, ein spielfreies Laboranalogsystem bereitzustellen.

Diese Aufgabe wird durch den Gegenstand des unabhängigen Anspruchs 1 gelöst. Vorteilhafte Ausführungsformen sind Gegenstand der abhängigen Ansprüche, der Beschreibung und der Figuren.

Erfindungsgemäß wird die Aufgabe gemäß Anspruch 1 durch ein Laboranalogsystem zur räumlichen Simulation einer Position eines Zahnimplantats in einem Abformmodell gelöst. Durch das Laboranalogsystem wird beispielsweise der technische Vorteil erreicht, dass ein Spiel verringert wird und ein unbeabsichtigtes Lösen des eingesetzten Einsatzpfostens verhindert wird. Durch das Sperren der radialen Bewegung des Federabschnitts wird eine axiale Bewegung des Einsatzpfostens verhindert.

In einer vorteilhaften Ausführungsform des Laboranalogsystems umfasst das Sicherungselement einen umlaufenden Ringabschnitt zum Begrenzen einer axialen Bewegung des Sicherungselements. Dadurch wird beispielsweise der technische Vorteil erreicht, dass der Einsatzpfosten in jeder Orientierung fixiert werden kann.

In einer weiteren vorteilhaften Ausführungsform des Laboranalogsystems umfasst das Sicherungselement einen Hals zum Sperren der radialen Bewegung des Federabschnitts. Dadurch wird beispielsweise der technische Vorteil erreicht, dass eine Freigabe des Einsatzpfostens wirksam gesperrt werden kann.

In einer weiteren vorteilhaften Ausführungsform des Laboranalogsystems umfasst der Hals eine konische Form zum Ausüben einer zunehmenden Kraft auf den Federabschnitt beim Eindrehen des Sicherungselements. Dadurch wird beispielsweise der technische Vorteil erreicht, dass durch ein Anziehen des Sicherungselements der Federabschnitt fest nach Außen gedrückt werden kann.

Erfindungsgemäß umfasst das Sicherungselement eine umlaufende Ausnehmung zum Aufnehmen des Federabschnitts in der Freigabeposition. Dadurch wird beispielsweise der technische Vorteil erreicht, dass eine kompakte Bauform des Laboranalogsystems erreicht wird.

In einer weiteren vorteilhaften Ausführungsform des Laboranalogsystems umfasst der Federabschnitt des Einsatzpfostens einen Stützabschnitt zum radialen Abstützen an dem Sicherungselement in der Sperrposition. Dadurch wird beispielsweise der technische Vorteil erreicht, dass die Sperrwirkung des Federabschnitts verbessert wird.

In einer weiteren vorteilhaften Ausführungsform des Laboranalogsystems west der Stützabschnitt im Querschnitt eine Keilform auf. Dadurch wird beispielsweise der technische Vorteil erreicht, dass die Sperrwirkung beim Eindrehen des Sicherungselements noch weiter verbessert wird.

In einer weiteren vorteilhaften Ausführungsform des Laboranalogsystems wird der Federabschnitt durch zwei Schlitze gebildet, die in axialer Richtung in dem Einsatzpfosten verlaufen. Dadurch wird beispielsweise der technische Vorteil erreicht, dass sich der Federabschnitt auf einfache Weise herstellen lässt.

In einer weiteren vorteilhaften Ausführungsform des Laboranalogsystems umfasst der Federabschnitt einen nach Außen stehenden Rastvorsprung. Dadurch wird beispielsweise der technische Vorteil erreicht, dass der Einsatzpfosten fest in der Hülse fixiert werden kann.

In einer weiteren vorteilhaften Ausführungsform des Laboranalogsystems umfasst der Einsatzpfosten zwei gegenüberliegende Federabschnitte. Dadurch wird beispielsweise der technische Vorteil erreicht, dass ein Einsetzen des Einsatzpfostens in die Hülse erleichtert wird.

In einer weiteren vorteilhaften Ausführungsform des Laboranalogsystems umfasst der Einsatzpfosten eine Führungsnut zum Führen des Einsatzpfostens an einem Führungsabschnitt beim Einsetzen in die Hülse. Dadurch wird beispielsweise der technische Vorteil erreicht, dass der Einsatzpfosten nur in einer vorgesehenen Orientierung eingesetzt werden kann.

In einer weiteren vorteilhaften Ausführungsform des Laboranalogsystems umfasst die Hülse einen an der Innenseite umlaufenden Vorsprung. Dadurch wird beispielsweise der technische Vorteil erreicht, dass der Federabschnitt an dem Vorsprung angreifen kann.

In einer weiteren vorteilhaften Ausführungsform des Laboranalogsystems umfasst das Sicherungselement ein Gewinde. Dadurch wird beispielsweise der technische Vorteil erreicht, dass das Sicherungselement durch Drehen zwischen der Freigabeposition und der Sperrposition bewegt werden kann.

In einer weiteren vorteilhaften Ausführungsform des Laboranalogsystems umfasst das Sicherungselement eine Ausnehmung zum Einsetzen eines Drehwerkzeugs, wie beispielsweise eine sechseckige Ausnehmung für einen Sechskantschlüssel. Dadurch wird beispielsweise der technische Vorteil erreicht, dass das Sicherungselement auf einfache Weise angezogen werden kann.

Ausführungsbeispiele der Erfindung sind in den Zeichnungen dargestellt und werden im Folgenden näher beschrieben.

Es zeigen:
- Fig. 1: eine Explosionsansicht eines Laboranalogsystems;
- Fig. 2: eine Teilquerschnittsansicht durch das zusammengesetzte Laboranalogsystem;
- Fig. 3: eine Querschnittsansicht durch das zusammengesetzte Laboranalogsystem in Sperrposition; und
- Fig. 4: eine Querschnittsansicht durch das zusammengesetzte Laboranalogsystem in Freigabeposition.

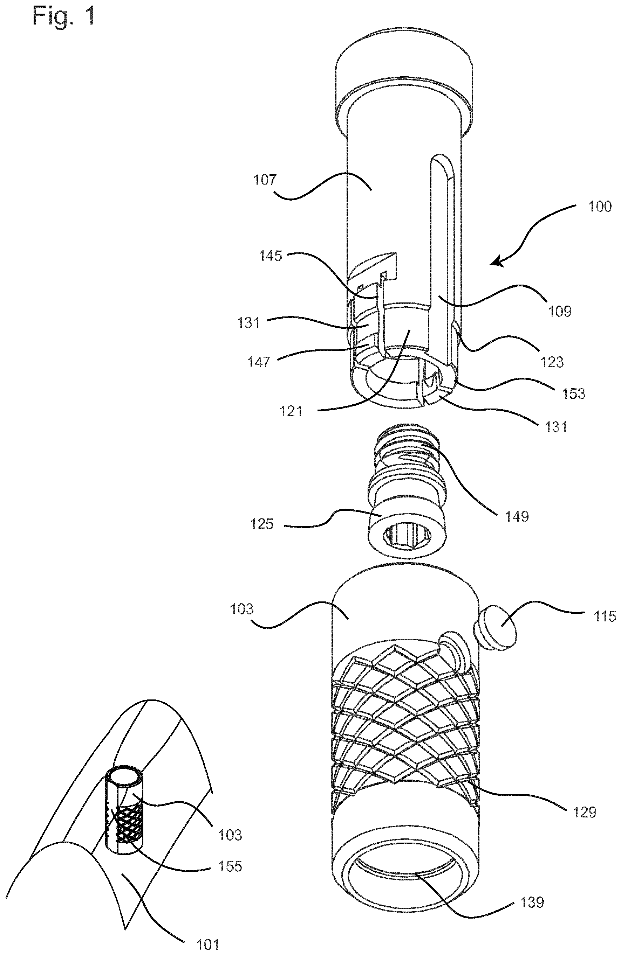

Fig. 1 zeigt eine Explosionsansicht eines Laboranalogsystems 100. Das Laboranalogsystem 100 dient zur räumlichen Simulation einer Verbindung und Position eines Zahnimplantats in einem Abformmodell. Das Laboranalogsystem 100 sitzt im Abformmodell 101 an der gleichen Position wie das Implantat im Mund. Um die räumlichen Gegebenheiten möglichst exakt widerzugeben, ist das Laboranalogsystem 100 mit einer hohen Präzision ausgestaltet.

Das Laboranalogsystem 100 umfasst eine Hülse 103 und einen Einsatzpfosten 107. Die Hülse 103 wird in dem Abformmodell 101 des Gebisses verankert, wie beispielsweise einem Gips- oder Kunststoffmodell. Zu diesem Zweck weist die zylindrische Hülse 103 an der Außenseite eine rautenartige Profilierung 129 mit Vertiefungen auf, in die der Gips eindringt. Weiter weist die Hülse 103 eine seitliche Abflachung 155 auf, die zur Positionierung dient, wenn die Hülse 103 in ein Modell des Gebisses eingeklebt wird, das mit einer entsprechenden Öffnung nach einem digitalen Datensatz erstellt worden ist.

Dadurch kann die Hülse 103 fest und verdrehsicher in dem Abformmodell 101 verankert oder befestigt werden. Im Inneren der Hülse 103 ist zylindrischer Hohlraum gebildet. In diesen Hohlraum ragt ein stiftförmiger Führungsabschnitt hinein, der durch einen radial von außen eingesetzten Formkörper 115 gebildet wird.

Nach der Fertigung des Abformmodells 101 mit der Hülse 103 wird der Einsatzpfosten 107 in den Hohlraum der Hülse 103 koaxial eingesetzt und mittels einer Sicherungsschraube 125 als Sicherungselement fixiert. Im Allgemeinen können aber auch andere Sicherungselemente als Sicherungsschrauben verwendet werden, wie beispielsweise ein eindrückbarer Stift. Der eingesetzte Einsatzpfosten 107 ragt zum Teil aus dem Abformmodell 101 heraus und umfasst eine mechanische Schnittstelle für ein Abutment.

Um ein orientierungsrichtiges Einsetzen des Einsatzpfostens 107 in die Hülse 103 zu ermöglichen, umfasst der Einsatzpfosten 107 eine Führungsnut 109. Der Führungsabschnitt der Hülse 103 gleitet beim Einführen innerhalb der Führungsnut 109 bis dieser am Ende der Führungsnut 109 anschlägt. Im unteren Bereich des Einsatzpfostens 107 ist ein Ringabschnitt 121 mit einem geringeren Außendurchmesser als im mittleren Bereich des Einsatzpfostens 107 angeordnet.

Durch den Ringabschnitt 121 mit einem geringeren Außendurchmesser kann der Einsatzpfosten 107 beim Einsetzen teilweise über den umlaufenden und nach Innen stehenden Vorsprung 139 der Hülse 103 gleiten. Der Vorsprung 139 dient als Rastabschnitt für die Federabschnitte 133. Der Vorsprung 139 weist im Querschnitt ein V-Profil mit zwei schiefen Flächen auf. Werden die Federabschnitte 133 durch die Sicherungsschraube 125 nach außen gedrückt, entsteht zusätzlich eine Kraft in axialer Richtung, die den Einsatzpfosten 107 in die Hülse 103 zieht.

Der Ringabschnitt 121 wird durch eine umlaufende Kante 123 begrenzt. Durch die Höhe des Ringabschnittes 121 kann die Länge und die Federwirkung des Federabschnitts 131 beeinflusst werden. Der Ringabschnitt 121 weist eine konische Form auf, so dass der Ringabschnitt 121 beim erstmaligen Eindrehen der Sicherungsschraube 125 über den Stützabschnitt 143 gleiten kann.

Wird der Einsatzpfosten 107 in einer nicht-vorgesehen Orientierung eingesetzt, stößt der nach innen ragende Führungsabschnitt an der Unterkante 153 des Einsatzpfostens 107 an und verhindert ein weiteres Einschieben. Erst wenn der Einsatzpfosten 107 derart gedreht wird, dass die Führungsnut 109 in Übereinstimmung mit dem innen liegenden Führungsabschnitt der Hülse 103 ist, wird ein weiteres Einschieben des Einsatzpfostens 107 ermöglicht. Dadurch wird sichergestellt, dass sich der Einsatzpfosten 107 in der Endlage stets in der richtigen Orientierung befindet.

Der Einsatzpfosten 107 umfasst zudem zwei gegenüberliegende Federabschnitte 131, die durch in axialer Richtung verlaufende Schlitze 145 gebildet werden. Die Federabschnitte 131 sind radialer Richtung federnd beweglich. Beim Einsetzen des Einsatzpfostens 107 in die Hülse 103 rasten die Federabschnitte 131 hinter einem umlaufenden Vorsprung 139 in der Hülse 103 ein. Zu diesem Zweck umfassen die Federabschnitte 131 jeweils einen radial nach Außen stehenden Rastvorsprung 147, der beim Einsetzen über umlaufenden Vorsprung 139 der Hülse 103 gleitet und danach hinter dem Vorsprung 139 in einschnappt. Der Rastvorsprung 147 weist ebenfalls schiefe Flächen auf, die an den schiefen Flächen des V-Profils des Vorsprungs 139 anliegen.

In dieser Position wird die Sicherungsschraube in eine Sicherungsposition angezogen, so dass die Federabschnitte 131 an der Außenseite der Sicherungsschraube 125 anliegen und eine radiale Bewegung der Federabschnitte 131 nach Innen gesperrt ist. Dadurch wird die Position des Einsatzpfostens 107 in der Hülse 103 gesichert. Um den Einsatzpfostens 107 aus der Hülse 103 zu entfernen, wird die Sicherungsschraube 125 in eine Freigabeposition gedreht, in der eine federnde Bewegung der Federabschnitte 131 ermöglicht wird.

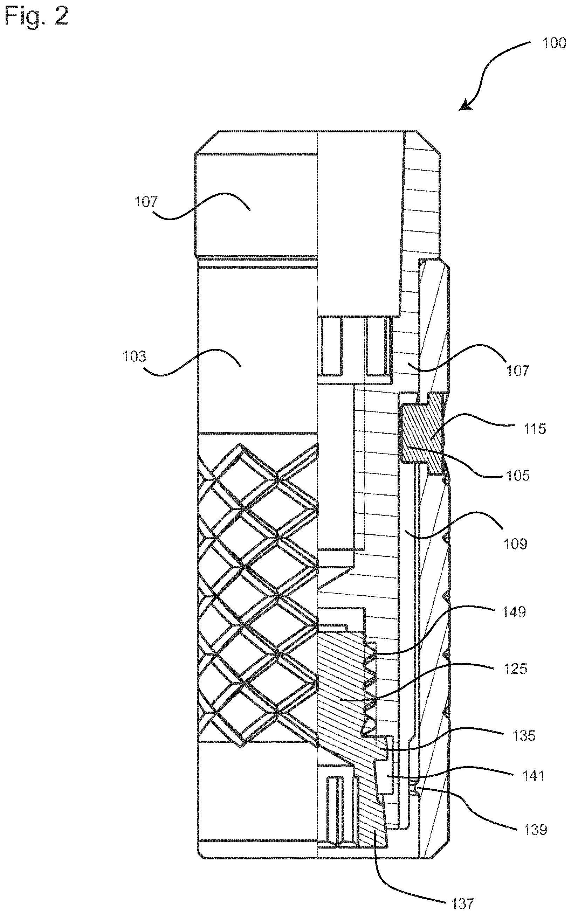

Fig. 2 zeigt eine Teilquerschnittsansicht durch das zusammengesetzte Laboranalogsystem 100 mit dem Einsatzpfosten 107 und der Hülse 103. Der Einsatzpfosten 107 ist aus einer Metalllegierung oder Zirkon gebildet und weist beispielsweise einen Durchmesser von 3 mm und eine Höhe von 12 mm auf. Die Hülse 107 ist aus Metall gebildet und weist beispielsweise einen Innendurchmesser von 3 mm, einen Außendurchmesser von 4 mm und eine Höhe von 10 mm auf. Der Einsatzpfosten 107 kann als Adapter für die mechanischen Schnittstellen von unterschiedlichen Herstellern dienen.

Die Sicherungsschraube 125 befindet sich in der Sperrposition, in der eine radial Bewegung der Federabschnitte 131 verhindert wird. Die Sicherungsschraube 131 umfasst einen radial abstehenden umlaufenden Ringabschnitt 135, der sowohl ein Eindrehen als auch ein Herausdrehen der Sicherungsschraube 125 begrenzt. Der Ringabschnitt 135 befindet sich in einer umlaufenden Ausnehmung 141, die einen oberen und einen unteren Anschlag für den Ringabschnitt 135 bildet und zum Aufnehmen der radial nach Innen gebogenen Federabschnitte 131 in der Freigabeposition dient. Die Sicherungsschraube 125 umfasst einen konischen Hals 137 als Stützfläche für die Federabschnitte 131.

Der nach innen ragende Führungsabschnitt 105 befindet sich in der Führungsnut 109, so dass der Einsatzpfosten 107 in der vorgesehenen Orientierung beim Einsetzen geführt wird.

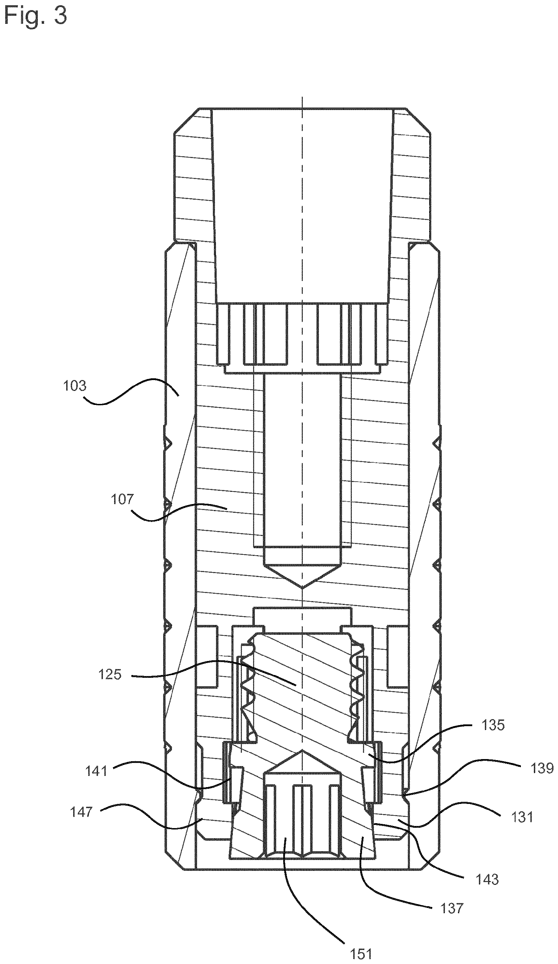

Fig. 3 zeigt eine Querschnittsansicht durch das zusammengesetzte Laboranalogsystem 100 mit der Sicherungsschraube 125 in Sperrposition. In der Sperrposition ist die Sicherungsschraube in einer eingedrehten Stellung. Ein Eindrehen der Sicherungsschraube 125 wird durch den umlaufenden Ringabschnitt 135 begrenzt, der an der oberen Kante der Ausnehmung 141 anliegt.

Der keilförmige, nach Innen ragende Stützabschnitt 143 liegt am konischen Hals 137 der Sicherungsschraube 125 an und verhindert die Bewegung der Federabschnitte 131 nach Innen. Der konische Hals 137 übt auf die Federabschnitte 131 eine radial nach außen wirkende Kraft aus. Nach außen hin ist die Bewegung der Federabschnitte 131 durch die Hülse 103 begrenzt. Der nach Außen stehende Rastvorsprung 147 liegt an dem umlaufenden Vorsprung der Hülse 103 an. Die Federabschnitte 131 rasten kraftschlüssig hinter dem umlaufenden Vorsprung 139 ein. Dadurch wird ein Lösen des Einsatzpfostens 107 aus der Hülse 103 verhindert.

Die Sicherungsschraube 125 ist mit dem Gewinde 149 in den Einsatzpfosten 107 eingedreht. Die Sicherungsschraube 125 umfasst eine Ausnehmung 151 zum Einsetzen eines Drehwerkzeugs. Dadurch kann die Sicherungsschraube 125 mit einem hohen Drehmoment angezogen und gelöst werden.

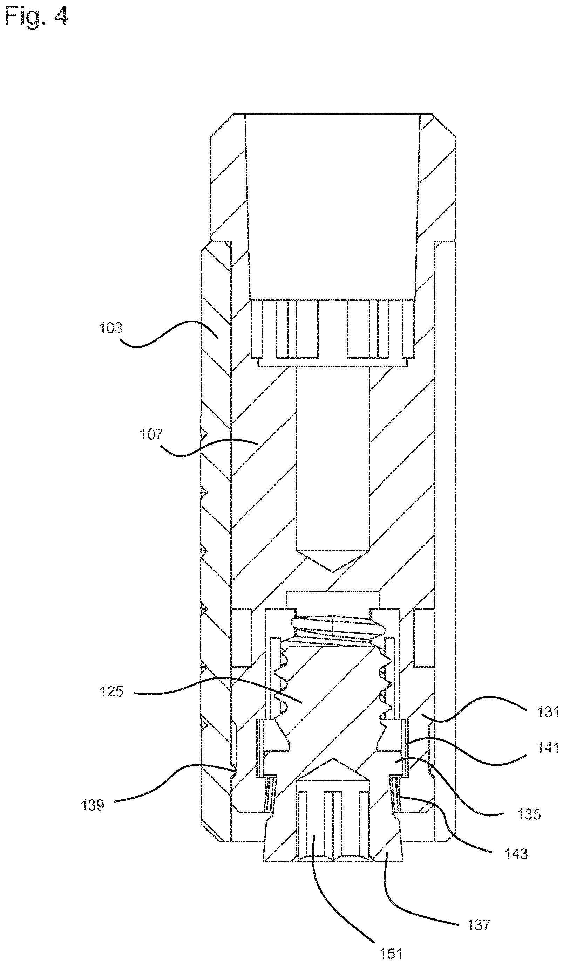

Fig. 4 zeigt eine Querschnittsansicht durch das zusammengesetzte Laboranalogsystem 100 mit der Sicherungsschraube 125 in Freigabeposition. In der Freigabeposition ist die Sicherungsschraube 125 in einer herausgedrehten Stellung. Ein weiteres Herausdrehen der Sicherungsschraube 125 wird durch den umlaufenden Ringabschnitt 135 begrenzt, der an der unteren Kante der ringförmigen Ausnehmung 141 anliegt. Dadurch kann ein unbeabsichtigtes Verlieren der Sicherungsschraube 125 verhindert werden. Die Sicherungsschraube 125 ist dadurch verliersicher in dem Einsatzpfosten 107 gelagert.

Der keilförmige, nach Innen ragende Stützabschnitt 143 liegt nicht am konischen Hals 137 der Sicherungsschraube 125 an, so dass sich die Federabschnitte 131 federnd radial nach Innen bewegen können. Dadurch können die Federabschnitte 131 beim Herausziehen des Einsatzpfostens 107 über den umlaufenden Vorsprung 139 gleiten, so dass ein Lösen des Einsatzpfostens 107 aus der Hülse 103 ermöglicht wird.

Durch die Sicherungsschraube 125 wird eine feste und spielfreie Verbindung zwischen dem Einsatzpfosten 107 und der Hülse 103 ermöglicht.

### BEZUGSZEICHENLISTE

- 100: Laboranalogsystem
- 101: Abformmodell
- 103: Hülse
- 105: Führungsabschnitt
- 107: Einsatzpfosten
- 109: Führungsnut
- 115: Formkörper
- 121: Ringabschnitt
- 123: Kante
- 125: Sicherungselement/Sicherungsschraube
- 129: Profilierung
- 131: Federabschnitt
- 135: Ringabschnitt
- 137: Hals
- 139: Vorsprung
- 141: Ausnehmung
- 143: Stützabschnitt
- 145: Schlitz
- 147: Rastvorsprung
- 149: Gewinde
- 151: Ausnehmung
- 153: Unterkante
- 155: Abflachung

## Patentansprüche

1. Laboranalogsystem (100) zur räumlichen Simulation einer Position eines Zahnimplantats in einem Abformmodell (101), mit:
- einer Hülse (103);
- einem Einsatzpfosten (107) mit zumindest einem radial beweglichen Federabschnitt (131) zum Einrasten an der den Einsatzpfosten (107) umgebenden Hülse (103); und
- einem beweglichen Sicherungselement (125) zum Sperren einer radialen Bewegung des Federabschnitts (131) in einer Sicherungsposition, das eine umlaufende Ausnehmung (141) zum Aufnehmen des Federabschnitts (131) in einer Freigabeposition, in welcher der Einsatzpfosten aus der Hülse entfernbar ist, umfasst.

2. Laboranalogsystem (100) nach Anspruch 1, wobei das Sicherungselement (125) einen umlaufenden Ringabschnitt (135) zum Begrenzen einer axialen Bewegung des Sicherungselements (125) umfasst.

3. Laboranalogsystem (100) nach einem der vorangehenden Ansprüche, wobei das Sicherungselement (125) einen Hals (137) zum Sperren der radialen Bewegung des Federabschnitts (131) umfasst.

4. Laboranalogsystem (100) nach Anspruch 3, wobei der Hals (137) eine konische Form zum Ausüben einer zunehmenden Kraft auf den Federabschnitt beim Eindrehen des Sicherungselements (125) umfasst.

5. Laboranalogsystem (100) nach einem der vorangehenden Ansprüche, wobei der Federabschnitt (131) des Einsatzpfostens (107) einen Stützabschnitt (143) zum radialen Abstützen an dem Sicherungselement (125) in der Sperrposition umfasst.

6. Laboranalogsystem (100) nach Anspruch 5, wobei der Stützabschnitt (143) im Querschnitt eine Keilform aufweist.

7. Laboranalogsystem (100) nach einem der vorangehenden Ansprüche, wobei der Federabschnitt (131) durch zwei Schlitze (145) gebildet wird, die in axialer Richtung in dem Einsatzpfosten (107) verlaufen.

8. Laboranalogsystem (100) nach einem der vorangehenden Ansprüche, wobei der Federabschnitt (131) einen nach Außen stehenden Rastvorsprung (147) umfasst.

9. Laboranalogsystem (100) nach einem der vorangehenden Ansprüche, wobei der Einsatzpfosten (107) zwei gegenüberliegende Federabschnitte (131) umfasst.

10. Laboranalogsystem (100) nach einem der vorangehenden Ansprüche, wobei der Einsatzpfosten (107) eine Führungsnut (109) zum Führen des Einsatzpfostens (107) an einem Führungsabschnitt (105) beim Einsetzen in die Hülse (103) umfasst.

11. Laboranalogsystem (100) nach einem der vorangehenden Ansprüche, wobei die Hülse (103) einen an der Innenseite umlaufenden Vorsprung (139) umfasst.

12. Laboranalogsystem (100) nach einem der vorangehenden Ansprüche, wobei das Sicherungselement (125) ein Gewinde (149) umfasst.

13. Laboranalogsystem (100) nach einem der vorangehenden Ansprüche, wobei das Sicherungselement (125) eine Ausnehmung (151) zum Einsetzen eines Drehwerkzeugs umfasst.

## Claims

1. A laboratory analog system (100) for the spatial simulation of a position of a dental implant in an impression model (101), comprising:
- a sleeve (103
- an insert post (107) having at least one radially movable spring portion (131) for engaging the sleeve (103) surrounding the insert post (107); and
- a movable securing member (125) for blocking a radial movement of the spring section (131) in a securing position, comprising a circumferential recess (141) for receiving the spring section (131) in a release position in which the insert post is removable from the sleeve.

2. The laboratory analog system (100) according to claim 1, wherein the securing member comprises a circumferential ring portion (135) for limiting an axial movement of the securing member (125).

3. The laboratory analog system (100) according to one of the preceding claims, wherein the securing member (125) comprises a neck (137) for blocking the radial movement of the spring section (131).

4. The laboratory analog system (100) according to claim 3, wherein the neck (137) comprises a conical shape for exerting an increasing force on the spring section when the securing member (125) is screwed in.

5. The laboratory analog system (100) according to one of the preceding claims, wherein the spring portion (131) of the insert post (107) comprises a support portion (143) for radially bearing against the securing member (125) in the bblocked position.

6. The laboratory analog system (100) according to claim 5, wherein the support section (143) is wedge shape in cross-section.

7. The laboratory analog system (100) according to one of the preceding claims, wherein the spring section (131) is formed by two slots (145) extending in axial direction in the insert post (107).

8. The laboratory analog system (100) according to one of the preceding claims, wherein the spring section (131) comprises an outwardly projecting detent projection (147).

9. The laboratory analog system (100) according to one of the preceding claims, wherein the insert post (107) comprises two opposing spring sections (131).

10. The laboratory analog system (100) according to one of the preceding claims, wherein the insert post (107) comprises a guide groove (109) for guiding the insert post (107) at a guide section (105) when being inserted into the sleeve (103).

11. The laboratory analog system (100) according to one of the preceding claims, wherein the sleeve (103) comprises a projection (139) circumferential on the inner side.

12. The laboratory analog system (100) according to one of the preceding claims, wherein the securing member (125) comprises a thread (149).

13. The laboratory analog system (100) according to one of the preceding claims, wherein the securing member (125) comprises a recess (151) for inserting a turning tool.

## Revendications

1. Système d'analogue de laboratoire (100) pour la simulation spatiale d'une position d'un implant dentaire dans un modèle d'empreinte (101), comprenant :
- un manchon (103)
- un poteau d'insertion (107) ayant au moins une section de ressort radialement mobile (131) pour s'enclencher avec le manchon (103) entourant le poteau d'insertion (107) ; et
- un élément de sécurisation mobile (125) pour bloquer un mouvement radial de la section de ressort (131) dans une position de sécurisation, qui comprend un évidement périphérique (141) pour recevoir la section de ressort (131) dans une position de libération dans laquelle le poteau d'insertion peut être retiré du manchon.

2. Système d'analogue de laboratoire (100) selon la revendication 1, dans lequel l'élément de sécurisation comprend une partie annulaire périphérique (135) pour limiter le mouvement axial de l'élément de sécurisation (125).

3. Système d'analogue de laboratoire (100) selon l'une des revendications précédentes, dans lequel l'élément de sécurisation (125) comprend un col (137) pour bloquer le mouvement radial de la section de ressort (131).

4. Système d'analogue de laboratoire (100) selon la revendication 3, dans lequel le col (137) comprend une forme conique pour exercer une force croissante sur la section de ressort lors du vissage de l'élément de blocage (125).

5. Système d'analogue de laboratoire (100) selon l'une des revendications précédentes, dans lequel la partie élastique (131) du poteau d'insertion (107) comprend une partie d'appui (143) pour s'appuyer radialement sur l'élément de blocage (125) dans la position de blocage.

6. Système d'analogue de laboratoire (100) selon la revendication 5, dans lequel la section d'appui (143) présente une forme de coin en coupe transversale.

7. Système d'analogue de laboratoire (100) selon l'une des revendications précédentes, dans lequel la section de ressort (131) est formée par deux fentes (145) qui s'étendent dans la direction axiale dans le poteau d'insertion (107).

8. Système d'analogue de laboratoire (100) selon l'une des revendications précédentes, dans lequel la section de ressort (131) comprend une saillie d'arrêt (147) s'étendant vers l'extérieur.

9. Système d'analogue de laboratoire (100) selon l'une des revendications précédentes, dans lequel le poteau d'insertion (107) comprend deux sections de ressort (131) opposées.

10. Système d'analogue de laboratoire (100) selon l'une des revendications précédentes, dans lequel le poteau d'insertion (107) comprend une rainure de guidage (109) pour guider le poteau d'insertion (107) sur une section de guidage (105) lors de l'insertion dans le manchon (103).

11. Système d'analogue de laboratoire (100) selon l'une des revendications précédentes, dans lequel le manchon (103) comprend une saillie périphérique (139) sur le côté intérieur.

12. Système d'analogue de laboratoire (100) selon l'une des revendications précédentes, dans lequel l'élément de sécurisation (125) comprend un filetage (149).

13. Système d'analogue de laboratoire (100) selon l'une des revendications précédentes, dans lequel l'élément de sécurisation (125) comprend un évidement (151) pour l'insertion d'un outil tournant.
